# EUROPEAN PATENT APPLICATION

(11) **EP 3 301 136 A1**
(43) Date of publication of application: **04.04.2018**
(21) Application number: 16191662.2
(22) Date of filing: 30.09.2016
(51) Int. Cl.: C08L 95/00

(54) **PROTECTIVE MEMBRANE COMPOSITION**

(71) Applicant: S.A. Imperbel N.V., 1651 Lot (BE)
(72) Inventor: AERTS, Hans, 1731 ZELLIK (BE); BOISDENGHIEN, Arnaud, 1360 PERWEZ (BE)
(74) Representative: Gevers Patents

(57) **Abstract**

The present invention concerns a protective membrane composition comprising:
- A bio-based composition containing:
c) A refined pyrolytic lignin having a viscosity ≥ 3000 mPa.s at 180 °C, measured according to the ASTM D2171 standard method, and a bituminous composition, or
d) Said refined pyrolytic lignin, and at least one oil chosen from the group consisting of vegetable oils, petrochemical oils, and mixtures thereof, where the bio-based composition is substantially free of any additional bituminous composition content,

- At least one polymer forming a polymeric matrix, wherein said bio-based composition is homogenously dispersed, and
- The protective membrane composition having a Newtonian viscosity comprised between 1500 and 30000 mPa.s, preferably between 3000 and 15000 mPa.s, determined according to the ASTM D2171 standard method.

## Description

The present invention relates to a protective membrane composition for a roof covering.

Crude oil can be located in specific places situated beneath the Earth's surface (ground or ocean). One process to extract crude oil is the hydraulic fracturing process commonly called 'fracking'. This can be used, for instance, to extract crude oil from an oceanic rock. After the drilling of oceanic rock, the nearby soil and vegetation in the ocean are destroyed, allowing for their regeneration, where the drilling has occurred.

Currently, some sources from which crude oil is extracted, are almost depleted, leading to an intense search for new crude oil sources. These are generally located in deeper zones situated beneath the Earth's surface, making the extraction process of crude oil more difficult. Therefore, the extraction of crude oil from such new crude oil sources, requires processes and devices which are more expensive.

Bitumen is generally obtained from a petrochemical source, in particular during the refining of crude oil.

A drawback of bitumen obtained from petrochemical origin, is that it has an environmental impact. The price factor, and the threat of a possible shortage of crude oil, have to be considered for the future. Hence, the development of alternative sources of bitumen should be considered.

Bitumen can be modified by mixing it with a polymer to form modified bitumen, which can have significant uses. When the amount of the added polymer will be sufficient to obtain a phase inversion, it will form a polymeric matrix, in which bitumen is retained. When this inversion phase occurs, the bitumen, having the behaviour of a Newtonian liquid, will thus have the properties of a viscoelastic fluid.

The polymer and bitumen have particular chemical interactions with each other. The polymer forms a continuous phase (polymeric matrix), and bitumen forms a dispersed phase. When the phase inversion occurs, bitumen is dispersed into the polymeric matrix giving adequate viscoelastic properties and stability to the composition. Such modified bitumen, can be used for manufacturing a waterproofing membrane having an appropriate flexibility, an advantageous aspect, for example, when the waterproofing membrane is applied on a roof. The phase inversion phenomenon depends on the ratios of the polymer and bitumen in the composition.

It has to be noted that the origin of bitumen, the process applied to produce bitumen, and the subsequent processes to treat it, will confer upon it desired properties, in order to meet requirements imposed by a field of technology. Indeed, bitumen can be used in the manufacturing of mastics, waterproofing products, preferably waterproofing membranes, in industry and in buildings.

Currently, it is preferable for economic reasons, as much as possible, to decrease the use of bitumen obtained during the refining of crude oil, in the aforementioned fields of application.

It is an object of the present invention to provide a protective membrane composition, which contains less bitumen of petrochemical origin, than known protective membrane compositions.

Towards this end, the invention provides a protective membrane composition, having properties, which are similar to those of a protective bituminous-based composition, where bitumen is the main compound of such composition.

To solve this problem, the invention provides a protective membrane composition for a roof covering, comprising:
- A bio-based composition containing:
   a) A refined pyrolytic lignin having a viscosity ≥ 3000 mPa.s at 180 °C, measured according to the ASTM D2171 standard method, and a bituminous composition, or
   b) Said refined pyrolytic lignin, and at least one oil chosen from the group consisting of vegetable oils, petrochemical oils, and mixtures thereof, where the bio-based composition is substantially free of any additional bituminous composition content,
- At least one polymer forming a polymeric matrix, wherein said bio-based composition is homogenously dispersed, and
- The protective membrane composition having a Newtonian viscosity comprised between 1500 and 30000 mPa.s, preferably between 3000 and 15000 mPa.s, determined according to the ASTM D2171 standard method.

Regarding the bio-based composition, the present invention provides two alternatives.

The first alternative refers to the bio-based composition, when it comprises a refined pyrolytic lignin, having a viscosity ≥ 3000 mPa.s at 180 °C, measured according to the ASTM D2171 standard method, and a bituminous composition.

The refined pyrolytic lignin of the present invention is characterized by a particular viscosity, which allows mixing it homogeneously with the bituminous composition.

Furthermore, the refined pyrolytic lignin of the present invention, preferably has a high molecular weight distribution, which can be of at least 500 g/mol, preferably at least 600 g/mol, more preferably at least 800 g/mol, most preferably at least 900 g/mol, in particular at least 1200 g/mol, specifically at least 1500 g/mol, more specifically at least 2000 g/mol, advantageously at least 2500 g/mol, more advantageously at least 3000 g/mol.

The refined pyrolytic lignin of the present invention is valuable, since it can form a fraction which is almost essentially made of this pyrolytic lignin. So, the content of water in this fraction can be highly reduced, with respect to known pyrolytic lignin, quite intensified in the bio-based composition.

In the second alternative, the bio-based composition comprises the refined pyrolytic lignin as described above, and at least one oil chosen from the group consisting of vegetable oils, petrochemical oils, and mixtures thereof.

More preferably, the vegetable oil is crude tall-oil pitch.

With this second option, bitumen is no longer even necessary, since the refined pyrolytic lignin and the at least one oil, enable forming a bio-based composition.

In this way, the present invention enables using raw materials coming from renewable energy sources, in order to provide a refined pyrolytic lignin within a protective membrane composition.

It has been observed that the bio-based composition (first or second alternative), is highly advantageous, since it can be mixed with the at least one polymer, preferably at least one thermoplastic polymer, enabling forming a polymeric matrix, wherein the bio-based composition is homogenously dispersed.

So, in the first alternative and the second alternative as well, bitumen is no longer a main compound of the composition, since the presence of the refined pyrolytic lignin in the bio-based composition enables highly reducing the presence of bitumen, and, at the same time, enables creating a polymeric matrix, without adversely affecting the properties of the composition.

Such a protective membrane composition, offers the advantage, that for the bio-based composition, no bitumen, or much less bitumen based on crude oil, is required. Thus, a protective membrane can be obtained, which is more environmentally friendly, than the existing membranes based on bitumen.

Another important advantage is that the problem of acid leaching from bitumen, which can lead to acidified rain water, is substantially reduced, as the quantity of bitumen, is substantially less or even totally non-existent. Recovered rain water can consequently be used with less treatment, for sanitary or other applications.

The protective membrane composition of the present invention, may also be used in adhesives, mastics, coating materials, or for indoor applications, preferably for manufacturing an air-tight membrane, for manufacturing floor tiles or carpet tiles.

Advantageously, the bio-based composition of the first alternative (a) comprises between 15 - 97 % by weight of the bituminous composition or wherein the bio-based composition of the second alternative (b) comprises between 15 - 97 % by weight of said at least one oil, with respect to the total weight of the protective membrane composition.

More advantageously, the bio-based composition of the first alternative (a) comprises less than 60 % by weight of the bituminous composition, with respect to the total weight of the protective membrane composition.

In a particular embodiment, the bio-based composition (first (a) or second alternative (b)) comprises between 3 and 85 % by weight of pyrolytic lignin, with respect to the total weight of the composition.

Preferably, the bio-based composition of the first alternative (a) comprises said at least one oil, which acts as a plasticizer, in an amount comprised between 1-20 % by weight, with respect to the total weight of the protective membrane composition.

In a preferred embodiment, said at least one oil acting as a plasticizer is crude tall-oil pitch.

In a particularly preferred embodiment according to the invention, the composition comprises between 0,5 - 40 % by weight, preferably between 1 - 25 % by weight, more preferably between 1 - 20 % by weight of the at least one polymer, with respect to the total weight of the protective membrane composition.

According to a particular embodiment, the at least one polymer is a thermoplastic polymer chosen in the group consisting of styrene-butadiene-styrene (SBS), styrene-ethylene-butadiene-styrene (SEBS), styrene-isoprene-styrene (SIS), polyisobutene (PIB), polyhydroxubutyrate, polyolefins, polyvinylbutyrate (PVB), atactic polypropylene (APP), isotactic polypropylene (IPP), thermoplastic polyurethane (TPU) and mixtures thereof.

In a preferred embodiment of the present invention, said refined pyrolytic lignin is obtained by thermal treatment of a water-insoluble phase, which contains pyrolytic lignin, which is issued from separation of the pyrolytic lignin from a bio-oil liquid phase, resulting from a pyrolysis treatment of a biomass.

In a particularly preferred embodiment of the present invention, said refined pyrolytic lignin is obtained by thermal treatment of a water-insoluble phase, which contains pyrolytic lignin, which is issued from a water extraction of a bio-oil liquid phase, resulting from a pyrolysis treatment of a biomass.

Preferably, the refined pyrolytic lignin is substantially free of any additional water content.

More preferably, the composition of the present invention can be applied as adhesives, mastics, as coating material, used for indoor applications, preferably for manufacturing an air-tight membrane, used for manufacturing floor tiles or carpet tiles.

The composition of the present invention advantageously comprises between 1-40 % by weight of a filler chosen from the group consisting of calcium carbonate, colemanite, aluminate trihydrate (ATH) and mixtures thereof, with respect to the total weight of the protective membrane composition.

More advantageously, said at least one oil is crude tall-oil pitch.

Other embodiments of the protective membrane composition of the present invention are mentioned in the annexed claims.

The present invention also relates to a protective membrane for roof covering comprising a reinforcement layer having a first surface and a second surface, wherein at least the first surface is impregnated with the protective membrane composition of the present invention.

In an advantageous embodiment, the reinforcement layer can be a glass mat or fiber mat, made for instance of polyester, more preferably a woven or non-woven polyester fibers, or combinations thereof.

Other embodiments of the protective membrane of the present invention are mentioned in the annexed claims.

The present invention also pertains to a process for manufacturing the protective membrane composition of the present invention for a roof covering, comprising the steps of:
- Thermal treatment of a water-insoluble phase, which contains a pyrolytic lignin, along with obtaining a refined pyrolytic lignin, having a viscosity ≥ 3000 mPa.s at 180 °C, measured according to the ASTM D2171 standard method,
- Mixing said refined pyrolytic lignin, with:
   a) A bituminous composition along with formation of a bio-based composition, or
   b) At least one oil chosen from the group consisting of vegetable oils, petrochemical oils, and mixtures thereof, along with formation of a bio-based composition, which is substantially free of any additional bituminous composition content,
Adding to the bio-based composition said at least one polymer, until reaching an inversion phase, corresponding to the moment at which the polymer forms a polymeric matrix, wherein the bio-based composition is dispersed, along with formation of a protective membrane composition, having a Newtonian viscosity comprised between 1500 and 30000 mPa.s, preferably between 3000 and 15000 mPa.s, determined according to the ASTM D2171 standard method.

Preferably, the process comprises further the following steps:
- Pyrolytic treatment of a biomass at a predetermined temperature along with forming a gaseous phase, a charcoal solid phase, and a bio-oil liquid phase,
- Water addition to the bio-oil liquid phase, leading to the formation of a water-insoluble phase, which contains pyrolytic lignin, and a water-soluble phase, and
- Isolation of said water-insoluble phase containing the pyrolytic lignin.

Advantageously, the thermal treatment is a gradual thermal treatment, preferably an increasing-temperature-step thermal treatment.

More advantageously, the gradual thermal treatment consists of three subsequent steps, under vacuum.

In a preferred embodiment, the thermal treatment comprises:
- A first step wherein the water-insoluble phase is heated to a first predetermined temperature, comprised between 50-100 °C, preferably between 70-90 °C,
- A second step wherein the water-insoluble phase, obtained in the first step, is heated to a second predetermined temperature, comprised between 100-150 °c, preferably between 110-130 °C, and
- A third step wherein the water-insoluble phase, obtained in the second step, is heated to a third predetermined temperature, comprised between 150-250 °C, preferably between 180-200 °C.

In a specific embodiment of the present invention, each of the first, second and third predetermined pressures, is comprised between 80-120 mbar.

Other embodiments of the process according to the invention are mentioned in the annexed claims.

Additionally, the present invention relates to a process of manufacturing a protective membrane for a roof covering, comprising a step of applying the protective membrane composition of the present invention or obtained according to the process of the present invention, on at least a first surface of a reinforcement layer.

Other embodiments of the process of manufacturing the protective membrane for a roof covering are mentioned in the annexed claims.

Other characteristics and advantages of the invention will appear more clearly in the light of the following description of a particular non-limiting embodiment of the invention.

In the context of the present invention, it needs to be understood that the expression 'protective membrane', denotes a membrane that can be used in adhesives, mastics, coating materials, or even for indoor applications, such as air-tight membranes, floor tiles, carpet tiles and also in roof covering. Preferably, the protective membrane has waterproofing properties.

In the context of the present invention, the wording 'bituminous composition' refers to a composition, which comprises bitumen from crude oil origin. Such bitumen has a sol structure. So, it has a Newtonian viscosity comprised between 4000 and 20000 mPa.s, more preferably between 8000 and 10000 mPa.s.

Preferably, the bituminous composition consists basically in bitumen.

The protective membrane composition of the present invention is not dedicated to the formation of asphalt for road paving.

For the purpose of the present invention, the expression 'substantially free of any additional bituminous composition content', means that the additional bituminous composition content, relative to the total weight of the protective membrane composition, is lower than 1 weight %, in particular lower than 0,5 weight %, more preferably lower than 0,05 weight %, even more preferably lower than 0,005 weight %, most preferably equal to about 0,0005 weight %.

For the purpose of the present invention, the expression 'substantially free of any additional water content', means that the additional water content, relative to the total weight of the protective membrane composition, is lower than 2 weight %, in particular lower than 1 weight %, more preferably lower than 0,5 weight %, even more preferably lower than 0,05 weight %, most preferably lower than 0,005 weight %, even more preferably equal to about 0,0005 weight %.

Within the meaning of the present invention, the term 'volatile organic compounds' (VOCs), is defined in Europe as, organic compounds having at 293.15 K (for example, 20°C), a vapour pressure of 0.01 kPa or more, or having a corresponding volatility under particular conditions of use. An organic compound is defined as, any compound containing at least the element carbon or at least the element carbon and one or more of hydrogen, halogens (for example, chlorine, fluorine or bromine), oxygen, sulphur, phosphorus, silicon, or nitrogen, with the exception of carbon oxides and inorganic carbonates and bicarbonates. For hydrocarbon solvents, a vapour pressure of 0.01 kPa at 20°C corresponds to a boiling point or initial boiling point, in a range of temperature situated between 215-220°C. The VOC definition of the Solvent Emissions Directive is the most usual VOC definition in Europe (in the context of solvents).

The pyrolysis treatment of a biomass, a renewable energy source, forms three fractions: A charcoal solid phase, a bio-oil liquid phase, and a gaseous phase. The biomass typically comprises carbon, oxygen, and hydrogen. Such biomass can be found in rubbish, wood (e.g., pine wood), waste, landfill gases and alcohol fuels. These five sources can be converted, in order to produce the charcoal solid phase, the bio-oil liquid phase and gases, such as methane, hydrogen, carbon monoxide and carbon dioxide.

The bio-oil phase is advantageous in the context of the present invention, since it can be used to produce the refined pyrolytic lignin. This bio-oil phase can be mixed with water, which creates two phases: One water-insoluble phase, and one water-soluble phase. The water-insoluble phase mainly comprises pyrolytic lignin, VOC, and water.

The water-insoluble phase is isolated, and can be used as raw material, in order to provide the refined pyrolytic lignin of the present invention.

More precisely, the isolated water-insoluble phase, is thermally treated in such a way, that it is possible to provide a refined pyrolytic lignin, which can substitute for bitumen in a protective membrane composition.

One advantage of the thermal treatment, is to evaporate organic compounds, in particular VOCs, which could be an affecting element, when it is mixed with a bituminous composition, for example during the production of roof materials.

Indeed, the production of a roof covering requires elevated production temperature (around 180 °C), at which the compounds present in the initial pyrolytic lignin would evaporate, causing difficulties during the production due to the boiling point of the material, for instance, a gas emission provoking nauseous odor. Especially, phenolic compounds are produced during thermal treatment, as a result of partial degradation of the pyrolytic lignin. So, it is preferable to have refined pyrolytic lignin in the bio-based composition, in order to guarantee that the process for manufacturing a protective membrane, is not adversely affected by the evaporation of nauseous gases.

The thermal treatment is preferably a gradual thermal treatment, more preferably an increasing-temperature-step thermal treatment.

Advantageously, the gradual thermal treatment consists of three subsequent steps, under vacuum.

The first step may consist of heating the water-insoluble phase, which contains the pyrolytic lignin, to a first predetermined temperature, between 50-100 °C, preferably between 70-90 °C.

The second step may consist of heating the water-insoluble phase containing the pyrolytic lignin, obtained in the first step, to a second predetermined temperature, between 100-150 °c, preferably between 110-130 °C.

The third step may consist of heating the water-insoluble phase, obtained in the second step, to a third predetermined temperature, between 150-250 °C, preferably between 180-200 °C.

The first, the second or the third step may be performed at a pressure between 80-120 mbar. Preferably, the whole thermal treatment comprising the above three steps of temperature, is operated at a constant pressure, preferably between 180-200 °C.

This thermal treatment is advantageous, since it allows forming a refined pyrolytic lignin, which has a viscosity ≥ 3000 mPa.s at 180 °C, measured according to the ASTM D2171 standard method,

More preferably, the refined pyrolytic lignin of the present invention, is substantially free of any additional water content.

The refined pyrolytic lignin of the present invention, can be used to form a bio-based composition, according to a first alternative or a second alternative.

In the first alternative, the refined pyrolytic lignin of the present invention, is mixed with a bituminous composition which may essentially consist of bitumen from crude oil origin.

The advantage of such bio-based composition, is that the amount of the bituminous composition in the protective membrane composition, is reduced with respect to known protective membrane composition, where bitumen cannot be sufficiently replaced, contrary to the present invention.

Preferably, the protective membrane composition comprises less than 60 % by weight of the bituminous composition, with respect to the total weight of the protective membrane composition.

In the second alternative, the refined pyrolytic lignin of the present invention, is mixed with an oil chosen from the group consisting of vegetable oils, petrochemicals oils, and mixtures thereof.

More preferably, the vegetable oil is crude tall-oil pitch.

This second alternative allows providing a bio-based composition which is substantially free of any additional bituminous composition content. In this case, the bio-based composition is an efficient substituent for bitumen.

Then, the bio-based composition of the first or second alternative, may be mixed with at least one polymer, preferably a thermoplastic polymer, until reaching an inversion phase, corresponding to the moment when the at least one polymer forms a polymeric matrix, wherein the bio-based composition is homogeneously dispersed.

Advantageously, a filler can be added to the blend comprising the polymeric matrix and the bio-based composition, for example, for providing fire-resistant properties to the protective membrane composition.

The protective membrane composition of the present invention, allows providing final products, such as adhesives, preferably cold adhesives, roof coverings, mastics, air-tight membranes, roof tiles, carpet tiles and even waterproof membranes, which have appropriate physical and chemical properties over time.

The at least one oil of the present invention can be crude tall-oil pitch, as described in patents EP 2399969 and US 2012041117, which are both incorporated by reference to define the crude tall-oil pitch of the present invention.

Generally, a process for manufacturing a protective and / or waterproofing membrane, requires a preparation of the protective membrane composition, and an application of this composition on a reinforcement layer.

A process for manufacturing a protective membrane comprises an application of the protective membrane composition of the present invention at least on one side of a reinforcement layer (glass and / or polyester fibre). Both sides of the reinforcement can be impregnated with the protective membrane composition of the present invention. Such process of applying a bituminous composition is detailed in US 2006/0110996. The method for applying a bituminous mass on at least one or both side(s) of the reinforcement layer, is given in WO 97/24485. For details about the manufacturing process, reference is made to both referred patent applications.

The protective membrane obtained after having applied the protective membrane composition on both sides of the reinforcement layer can be wound in a roll or even cut into several parts.

In the context of the present invention, the protective membrane composition can be also used for providing adhesives, preferably cold adhesives or mastics. It can be used for manufacturing coating materials, floor tiles or carpet tiles, or even for indoor applications through the manufacturing of air-tight membranes.

### Example 1

In a first embodiment of the present invention, a pyrolytic lignin (20.27 kg), obtained by the pyrolysis process, is introduced in a solvent reclaimer (IST 22N) and treated thermally at 100 mbar according to three consecutives steps. Firstly, the pyrolytic lignin is heated during 1 hour at 80 °C, then during 1 hour at 120 °C and finally during 2.5 hour at 190 °C. During this thermal treatment, comprising three steps according to this embodiment, mainly of the compounds evaporated are classified as VOCs and are named carbonyls, alkanes, aromatics ethers, phenols, acids, esters, alcohol and furans compounds.

At 80 °C, the process allows to evaporate mainly VOCs having a boiling point around 80°C and water in an amount situated in a range of 5-25 % in weight in the pyrolytic lignin.

At 120°C, the main component evaporated is water and at this stage of temperature other VOCs are evaporated from the pyrolytic lignin for instance, 2-butenal, toluene and formic acid.

At 190°C, more VOCs arrive at their boiling point and allow to form a pyrolytic lignin which is refined in comparison with the initial pyrolytic lignin before this thermal treatment. For instance, 1-(acetyloxy)-2-propanone, 2-methylphenol, crotonic acid, furfural or 1-methyl-2-(1-methylethyl) benzene are no more present in the final product.

These three steps eliminate different size of molecules in terms of the carbon number. So, the molecules evaporated in the first step are smaller (number of carbon lower) in comparison with those eliminated at the third step. This means that the three steps allow to evaporate particular compound.

After the thermal treatment, the product obtained is poured into a steel container in order to cool it by air and subsequently grounded into pieces suitable for further processing into the roofing membranes for instance.

### Example 2

According to a second embodiment of the present invention, 70 % by weight of a refined pyrolytic lignin is mixed with 10 % by weight of crude tall-oil pitch to form a bio-based composition. Then 15 % by weight of SBS, a thermoplastic polymer and 5 % by weight of calcium carbonate are added to the bio-based composition to form the protective membrane composition of the present invention.

### Example 3

A bio-based composition is formed by mixing 55 % by weight of bitumen and 25 % by weight of a refined pyrolytic lignin. In addition, 15 % by weight of a SBS and 5 % by weight of calcium carbonate are added to the bio-based composition to form a protective membrane composition according to a third embodiment of the present invention.

### Example 4

The protective membrane composition of example 1 to 3 can be used for manufacturing a protective membrane for roof covering by providing a glass fiber (reinforcement layer) having a first and second surfaces. The glass fiber is impregnated with one of the protective membrane composition of example 1,2 or 3, such a way that both surfaces are homogeneously impregnated with the protective membrane composition, as disclosed in the description.

### Comparative example 1

65 % by weight of bitumen from crude oil origin is mixed with 20 % by weight of SBS, a thermoplastic polymer, leading to the obtaining of a polymeric matrix (continuous phase) wherein the bitumen (dispersed phase) is dispersed. In addition, 15 % by weight of calcium carbonate (filler) is added into the blend.

Although the preferred embodiments of the invention have been disclosed for illustrative purpose, those skilled in the art will appreciate that various modifications, additions or substitutions are possible, without departing from the scope and spirit of the invention as disclosed in the accompanying claims.

## Claims

1. Protective membrane composition for a roof covering, comprising:
- A bio-based composition containing:
a) A refined pyrolytic lignin having a viscosity ≥ 3000 mPa.s at 180 °C, measured according to the ASTM D2171 standard method, and a bituminous composition, or
b) Said refined pyrolytic lignin, and at least one oil chosen from the group consisting of vegetable oils, petrochemical oils, and mixtures thereof, where the bio-based composition is substantially free of any additional bituminous composition content,
- At least one polymer forming a polymeric matrix, wherein said bio-based composition is homogenously dispersed, and
- The protective membrane composition having a Newtonian viscosity comprised between 1500 and 30000 mPa.s, preferably between 3000 and 15000 mPa.s, determined according to the ASTM D2171 standard method.

2. Protective membrane composition according to claim 1, wherein the bio-based composition (a) comprises between 15 - 97 % by weight of the bituminous composition or wherein the bio-based composition (b) comprises between 15 - 97 % by weight of said at least one oil, with respect to the total weight of the protective membrane composition.

3. Protective membrane composition according to claim 1 or 2, wherein the bio-based composition (a or b) comprises between 3 and 85 % by weight of pyrolytic lignin, with respect to the total weight of the composition.

4. Protective membrane composition according to any one of the preceding claims, wherein the bio-based composition (a) comprises said at least one oil, which acts as a plasticizer, in an amount comprised between 1-20 % by weight, with respect to the total weight of the protective membrane composition.

5. Protective membrane composition according to any one of the preceding claims, comprising between 0,5 - 40 % by weight, preferably between 1 - 25 % by weight, more preferably between 1 - 20 % by weight of the at least one polymer, with respect to the total weight of the protective membrane composition.

6. Protective membrane composition according to any one of the preceding claims, wherein said refined pyrolytic lignin is obtained by thermal treatment of a water-insoluble phase, which contains pyrolytic lignin, which is issued from a water extraction of a bio-oil liquid phase, resulting from a pyrolysis treatment of a biomass.

7. Protective membrane composition according to any one of the preceding claims, wherein the refined pyrolytic lignin is substantially free of any additional water content.

8. Protective membrane composition according to any one of the preceding claims, applied as adhesives, mastics, as coating material, used for indoor applications, preferably for manufacturing an air-tight membrane, used for manufacturing floor tiles or carpet tiles.

9. Protective membrane composition according to any one of the preceding claims, comprising further between 1-40 % by weight of a filler chosen from the group consisting of calcium carbonate, colemanite, aluminate trihydrate (ATH) and mixtures thereof, with respect to the total weight of the protective membrane composition.

10. Protective membrane composition according to any one of the preceding claims wherein said at least one oil is crude tall-oil pitch.

11. Protective membrane for roof covering comprising a reinforcement layer having a first surface and a second surface, wherein at least the first surface is impregnated with the protective membrane composition, according to any one of the preceding claims.

12. Process for manufacturing the protective membrane composition, according to any one of claims 1 to 10 for a roof covering, comprising the steps of:
- Thermal treatment of a water-insoluble phase, which contains a pyrolytic lignin, along with obtaining a refined pyrolytic lignin, having a viscosity ≥ 3000 mPa.s at 180 °C, measured according to the ASTM D2171 standard method,
- Mixing said refined pyrolytic lignin, with:
c) A bituminous composition along with formation of a bio-based composition, or
d) At least one oil chosen from the group consisting of vegetable oils, petrochemical oils, and mixtures thereof, along with formation of a bio-based composition, which is substantially free of any additional bituminous composition content,
- Adding to the bio-based composition said at least one polymer, until reaching an inversion phase, corresponding to the moment at which the polymer forms a polymeric matrix, wherein the bio-based composition is dispersed, along with formation of a protective membrane composition, having a Newtonian viscosity comprised between 1500 and 30000 mPa.s, preferably between 3000 and 15000 mPa.s, determined according to the ASTM D2171 standard method.

13. Process according to claim 12, further comprising the following steps:
- Pyrolytic treatment of a biomass at a predetermined temperature along with forming a gaseous phase, a charcoal solid phase, and a bio-oil liquid phase,
- Water addition to the bio-oil liquid phase, leading to the formation of a water-insoluble phase, which contains pyrolytic lignin, and a water-soluble phase, and
- Isolation of said water-insoluble phase containing the pyrolytic lignin.

14. Process according to claim 12 or 13, wherein the thermal treatment is a gradual thermal treatment, preferably an increasing-temperature-step thermal treatment.

15. Process according to claim 13 or 14, wherein the gradual thermal treatment consists of three subsequent steps, under vacuum.

16. Process according to claim 15, wherein the thermal treatment comprises:
- A first step wherein the water-insoluble phase is heated to a first predetermined temperature, comprised between 50-100 °C, preferably between 70-90 °C,
- A second step wherein the water-insoluble phase, obtained in the first step, is heated to a second predetermined temperature, comprised between 100-150 °c, preferably between 110-130 °C, and
- A third step wherein the water-insoluble phase, obtained in the second step, is heated to a third predetermined temperature, comprised between 150-250 °C, preferably between 180-200 °C.

17. Process according to claim 15 or 16, wherein each of the first, second and third predetermined pressures, is comprised between 80-120 mbar.

18. Process of manufacturing a protective membrane for a roof covering, comprising a step of applying the protective membrane composition, according to any one of claims 1 to 10, or obtained according to any one of claims 12 to 17, on at least a first surface of a reinforcement layer.
